# EUROPEAN PATENT APPLICATION

(11) **EP 0 770 569 A1**
(43) Date of publication of application: **02.05.1997**
(21) Application number: 95924508.5
(22) Date of filing: 06.07.1995
(51) Int. Cl.: B65G 53/60

(54) **PNEUMATIC TRANSFER METHOD AND APPARATUS**

(30) Priority: 08.07.1994 JP 180673/94
(71) Applicant: Ueda, Kazuyuki, Mie 514 (JP)
(72) Inventor: Ueda, Kazuyuki, Mie 514 (JP)
(74) Representative: Bond, Bentley George
(86) International application number: JP9501345
(87) International publication number: WO9601777

(57) **Abstract**

A pneumatic transfer method, wherein slit-carrying platy members are joined to an inner wall surface of a compartment so that a transfer passage and a suction air passage which are defined by these members constituting a boundary between these passages are formed in a mutually inclined or substantially straight-opposed state, an air film being formed through the slit defined by the members. A pneumatic transfer apparatus includes a substantially cylindrical apparatus body, a suction air passage opened at one end thereof in an upper wall of the apparatus body and connected at the other end thereof to a suction blower, an article transfer passage connected to and passed through a side wall of the apparatus body so that the transfer passage extends so as to cross the suction air passage, a first air current control plate projecting between the suction air passage and transfer passage and extending at right angles to the transfer passage so as to be opposed at a free end thereof to the axis of the transfer passage, and a second air current control plate projecting at a predetermined angle to the first air current control plate so as to hold the suction air passage between these two control plates and so as to be separated at a free end portion thereof from the first air current control plate and form a slit thereby.

## Description

Technical field: This invention relates to air flow conveying method and system.

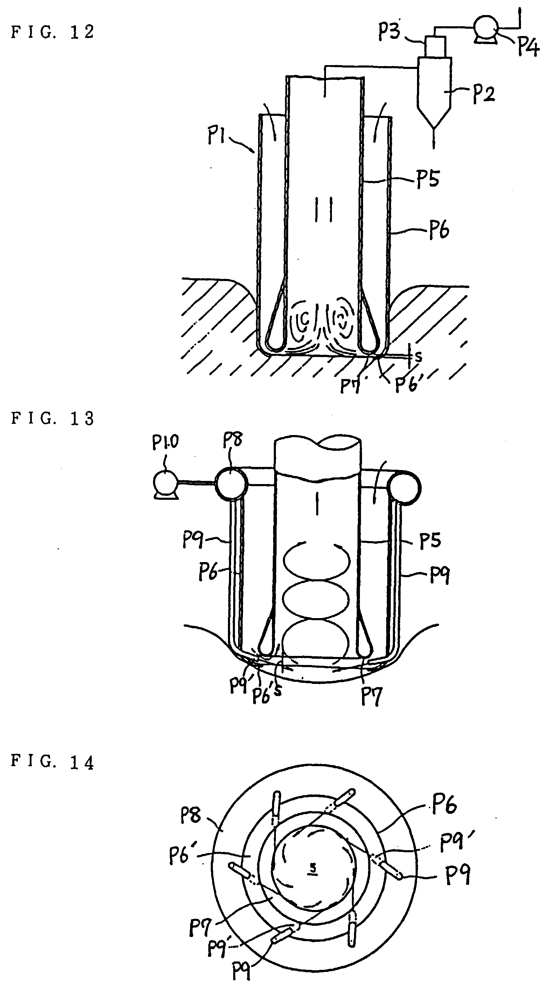

Background art: As an example of conventional vacuum suction transportation system (pneumatic conveyor), there was one which is disclosed in the Patent Bulletin No. 58-113029. Namely, as shown in Fig. 12, 13, 14, powder and granular material are sucked together with air through a suction nozzle P1, and powder and granular material are separated from air in a separator P2, further fine powder and granular material are separated in a bag filter P3 and the air are sucked with a suction blower P4. The suction nozzle P1 is composed of inner cylinder P5 of suction nozzle and outer cylinder P6 of suction nozzle for secondary air inflow provided on the outer circumference at its tip. To introduce the secondary air which flew into said outer cylinder P6 of suction nozzle into the inner cylinder P5 of suction nozzle, the tip P6' of the outer cylinder P6 of suction nozzle was curved inward, forming a gap S against the tip P7 of the inner cylinder P5 of suction nozzle.

Moreover, at the top end of the outer cylinder P6 of suction nozzle was provided a ring-shaped air main pipe P8 linked with an air fan P10. A plural number of air injection pipes are provided from that main pipe P8, and their nozzle tip P9' are guided to the tip of the outer cylinder P6 of suction nozzle along the outer face of the outer cylinder P6 of suction nozzle, and rushed from that tip portion to the tip side of the inner cylinder P5 of suction nozzle. And, by the air injected from the nozzle p9' of the respective injection pipes P9, a spiral flow are produced against the secondary air flowing into the inner cylinder P5 of suction nozzle through the gap S.

However, with such prior art, it was necessary to have equipment such as large-scale separator, bag, etc. to separate powder and granular material from air.

The object of the present invention is to provide air flow conveying method and system capable of making the separation with simple construction without requiring any large-scale equipment, to solve said problem and separate conveyed material from air current.

The first construction comprises an air flow conveying method characterized in that sheetlike member is made to protrude from wall face in a section, carrying route and suction air route are connected to the wall of said section either at a certain angle with each other or on about a straight line with the sheetlike member as border, and air is made to flow beyond the tip of said sheetlike member, to form air film.

The second construction comprises an air flow conveying method characterized in that sheetlike member having slit is provided on the wall face in a section, carrying route and suction air route are connected to the wall of said section either at a certain angle with each other or on about a straight line with the sheetlike member as border, and air is made to flow through the slit in said sheetlike member, to from air film.

The third construction comprises an air flow conveying method characterized in that carrying route is connected to the wall on one side of a section, suction air route is connected to the wall on the other side of the section on a line intersecting the extension line of the carrying rout, control board having slit is disposed in the neighborhood of the position where the extension lines of said two routes intersect each other, air is made to flow through said slit to form air film, and that the air current in the air film is diverted in direction at the portion of said slit.

The forth construction comprises an air flow conveying system characterized in that it comprises equipment body of about cylindrical shape, suction air route one end of which is open on the top face of the equipment body and the other end is connected to a suction blower unit, carrying route for conveying commodities connected through the side wall of said equipment body in the direction intersecting the suction air route, first air current control board provided in projection between said suction air route and said carrying route at right angle with the carrying route in such a way that its tip about corresponds to the central position of the carrying route, and second air current control board provided in projection at prescribed angle against said first air current control board in a way to pinch said suction air route with the first air current control board, the tip being separated from said first air current control board at prescribed distance to form slit.

The fifth construction comprises an air flow conveying system as defined in Claim 4, comprising means for changing distance between said first air current control board and said second air current control board.

The sixth construction comprises an air flow conveying system as defined in Claim 4 or Claim 5, wherein intermediate section positioned on the top inner side of the equipment body between said first and second air current control boards and the both side walls and top wall of the equipment body.

The seventh construction comprises an air flow conveying system as defined in Claim 4 or Claim 5, wherein intermediate section positioned on the top outer side of the equipment body is formed by said first and second air current control boards.

The eighth construction comprises an air flow conveying system as defined in Claim 4, Claim 5, Claim 6 or Claim 7, wherein no less than one auxiliary slit corresponding to the flow rate of the suction air route are provided in said second air current control board.

The nineth construction comprises an air flow conveying system as defined in Claim 4, Claim 5, Claim 6, Claim 7 or Claim 8, wherein the slit by said first and second air current control boards is positioned higher than the lower end of said first air current control board.

The tenth construction comprisesa an air flow conveying system as defined in Claim 4, Claim 5, Claim 6, Claim 7, Claim 8 or Claim 9, wherein the equipment body is of about rectangular parallelepiped form and the top part of the side wall on the side opposite to said carrying route side inclines on said carrying route side to continue to the top wall.

As the air suction device starts working, the sucked air takes the shape of a film by means of said first air flow control board and said second air flow control board and, at the same time, the air in said conveying route turns into an eddy (spiral) air current with the throttling of air by said two control boards. Commodity such as rice in the conveying route is sent efficiently by the eddy air current and led into the main body of this system. And, as the air current is diverted in direction into the sucked air route, the commodity gets out of the air current film, slows down by hitting against the side wall of the apparatus body and drops to the lower part of the main body to be stored there.

The eddy air current makes it possible to carry materials such as molded parts, cereals, powdery, etc. stably without clogging over a long distance.

The first and second air current control boards not only keep the air in the shape of a film at the end of the transportation route but also form a slight gap between themselves to accurately separate the sucked air from the conveyed article, thus enabling simplification of the system construction without requiring any special device for separating the material.

### Brief explanation of the drawings:

Fig. 1 is a vertical sectional view of an embodiment of the present invention.
Fig. 2 is a perspective view of main part of Fig. 1.
Fig. 3 is an expanded view of main part of Fig. 1.
Fig. 4 is a perspective view of main part of Fig. 1.
Fig. 5 is an explanatory drawing of actions of the present invention.
Fig. 6 is a drawing of other embodiment of the conveying route connecting section.
Fig. 7 is a perspective view of other embodiment of the control boards.
Fig. 8 is a perspective view of other embodiment of the control boards.
Fig. 9 is a drawing of mounted state of control boards.
Fig. 10 is a drawing of mounted state of control boards.
Fig. 11 is drawing of mounted state of control boards.
Fig. 12 is a vertical sectional view of the prior art.
Fig. 13 is a detailed view of main part of Fig. 12.
Fig. 14 is a horizontal sectional view of main part of Fig. 13.
Fig. 15 is a plan view of an embodiment of the powder conveying system.
Fig. 16 is a vertical sectional view of an embodiment of the powder conveying system.
Fig. 17 is an expanded view of main part of Fig. 16.
Fig. 18 is a drawing of other embodiment of the area around the slit.
Fig. 19 is an explanatory drawing of the conventional eddy current.
Fig. 20 is an explanatory drawing of the spiral flow of the present invention.

### Preferred embodiment of the present invention:

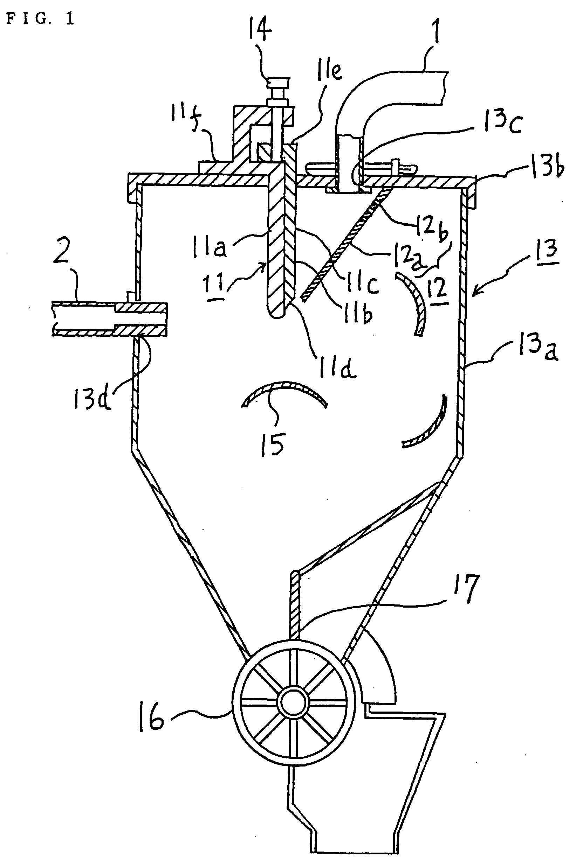

An embodiment of the present invention will be explained hereafter based on an example shown in the drawings. In Fig. 1, 2, 3, the system casing 13 is reduced in diameter into a conical shape at the lower part of the cylindrical body 13a having a vertical axis, and is provided with a lid 13b composed of a disc at the top end. One end of the sucked air route 1 is open through a filter F to the suction port 13c at the top face of the lid, while the other end is connected to a suction blower unit (not illustrated). In the direction intersecting an extension line of said sucked air route, a conveying route 2 for carrying commodities such rice, etc. passes through and is connected to the side wall of said system body 13a through a carrying port 13d.

Between said suction port 13c and said carrying port 13d, first air flow control board 11a protrudes downward from the bottom face of the lid 13b to be perpendicular to the direction of extension of the carrying route with the bottom end at about the central position of the extension line of the carrying route.

Namely, µ-shaped mounting piece 11f is fastened to the top face of the lid 13b, and from its lower end hangs down fixed board 11a passing through the lid. The fixed board 11a extends in the vertical face and is fastened between the side walls on the diameter of the main body 13a.

Guided by said fixed board 11a, mobile board 11b is kept vertically slidable. This mobile board 1b has a mobile body 11c of about the same shape and size as the fixed board 11a, and its lower end forms a sloped face 11d on said suction port 13c side. Moreover, at the top end of the mobile body 11c is integrally formed bend 11e in L shape on said carrying port 13d side. And, the bottom part of the adjusting screw bar 14 passing vertically through the top part of said mounting piece 11f is screw connected by passing vertically through the bend 11e.

In a way to pinch said suction port 13c together with said first air flow control board 11, second air flow control board 12 is provided in projection at a certain angle (45 in the illustration) against said first air flow control board 11, and its tip is separated from said first air flow control board at prescribed slight distance, forming slit (gap) G. The second air flow control board 12 inclines, from the bottom face of the lid 13b, toward the lower end of the first air flow control board 11, and is fixed between both side walls of the main body. In this way is formed intermediate section C partitioned between the both control boards 11, 12 and the both side walls of the main body. The top part of the second air flow control board 12 forms porous board 12b made of wire gauze, etc.

Here, said adjusting screw bar 14 is used as means for changing the distance between said first air flow control board 11 and said second air flow control board 12.

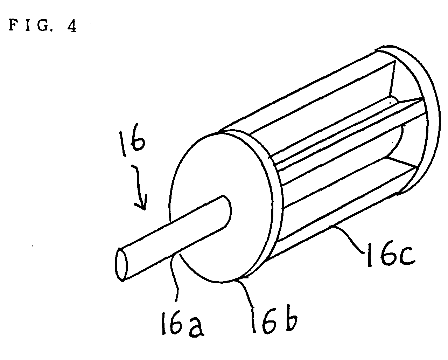

Inside said system body 13b is provided cushioning material 15 for damping flying or dropping of commodity (rice, etc.). At the lower end of the main body is provided measuring & discharging member 16, and at its top end is provided rubber board which is a protective member 17 against biting with a slight gap between them. Said measuring & discharging member 16 is of a type of public knowledge in which, as shown in Fig. 4, disc 16b is concentrically fixed to both end faces of rotary shaft 16a, and a plural number of partitions 16c are provided radially from the rotary shaft 16a. And, when one section between the partitions agrees with the discharge port at the lower end of the main body, the rice gets into that section and is discharged with the rotation (of the rotary shaft 16a).

Explanation will be given hereafter on the working state with the above construction. As the air suction system (not illustrated) is started, the sucked air takes the shape of a film with said first air flow control board 11 and said second air flow control board 12 and, with throttling of air by said two control boards, the air in said carrying route turns into eddy (spiral) air current.

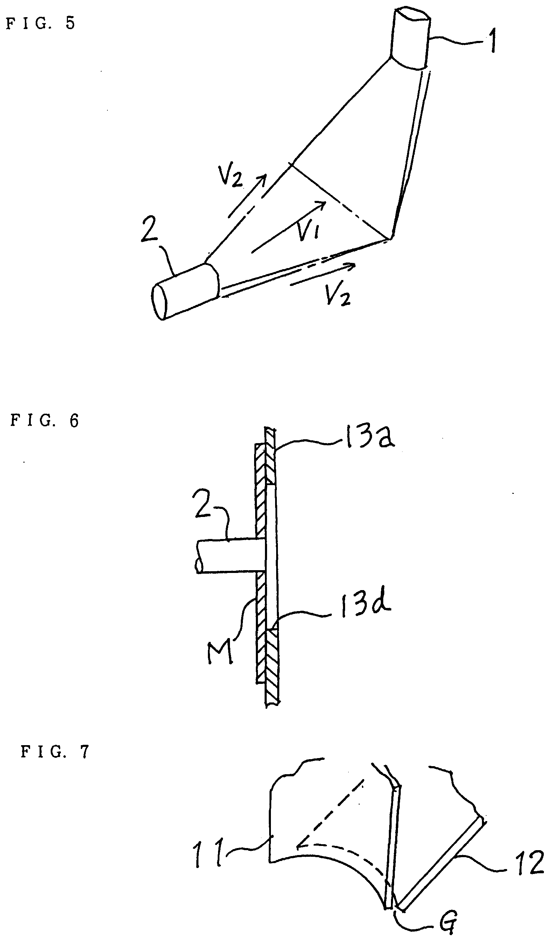

This change to eddy current is believed to be produced as follows: In Fig. 5, the air current forms 2 triangle films with the gap G at the border between the first and second control boards as base and the carrying port 13d and the suction port 13c as vertex. And, the flow velocity V1 on the center line of the triangle carrying route is larger than the flow velocity V2 on both hypotenuses of the triangle. This difference of speed produces stress (strain) in the air current film, and this stress is transmitted to the inside of the carrying route as eddy to produce a spiral air current progressing in the axial direction inside the carrying route.

Therefore, commodity such as rice, etc. is carried efficiently by the eddy air current inside the carrying route 2 and introduced into the main body 13a of this system. And, the air current is diverted in direction to the suction air route 1, the rice gets out of the air current film and slows down by hitting against either the first air flow control board 11 or the cushioning material 15 and drops to the lower part of the main body to be stored there. And then, it is discharged to outside the main body from the measuring & discharging member 16 at the lower end.

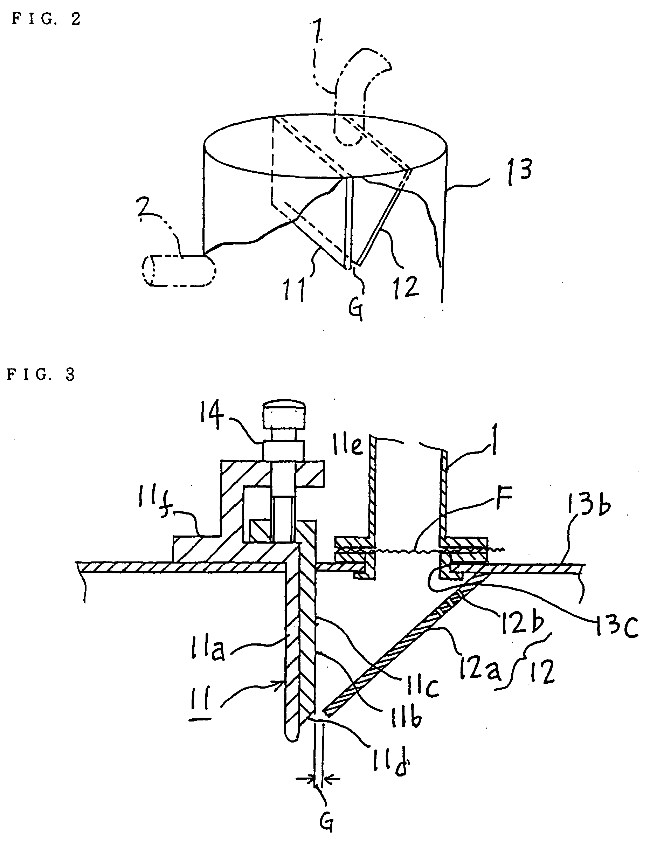

In Fig. 3, the thickness of said mobile board 11b is fixed to t = 10 mm and the clearance (gap G) between the surface of this mobile board 11b and the second air flow control board 12 is fixed at t = 0.5 mm, which is the minimum clearance. And, as the adjusting screw bar 14 is turned to make the mobile board 11b go up, the clearance between the inclined face 11d of the mobile board 11b and the second air flow control board 12 becomes wider and the flow rate of air current between them increases. When the mobile board 11b is at the upper limit position, the clearance between the fixed board 11a and the second air flow control board 12 comes to 10.5 mm, which is the maximum clearance. In case the value of said gap G is insufficient for the required flow rate, porous part 12b which is an auxiliary flow channel provided in the second air flow control board 12 responds to help.

Next, the test results will be given hereafter of a case in which rice is carried on the eddy air current with the method and apparatus of the present invention.
Diameter of equipment body 13a D = 400 mm,
Hanging length of first control board 11 from equipment lid 13b H = 100 mm,
Angle of second control board 12 against first control board 11 R = 45,
Gap between first and second control boards G = 0.5 mm,
Diameter of opening of carrying route d1 = 38 mm, distance from lid 13b h1 = 100 mm, diameter of opening of suction air route d2 = 38 mm,
Capacity of air sucking device 1.5 m3/min.

Fig. 6 indicates an example in which the opening position of said carrying route 2 is realized to be vertically adjustable. The carrying port 13d is composed of a slit extending in the vertical direction. Moreover, to the tip of the carrying route 2 is fixed mounting board M made of rubber board by passing through that opening. And, the mounting board M is detachably connected to the main body 13c in a way to cover said carrying port 13d. The vertical length of the mounting board is set fairly greater than that of the slit 13d, and the mounting position can be changed vertically by the amount of this excessive length. Around the slit 13d are provided a plural number of bolt holes to enable change of the mounting position.

If the position of the carrying route 2 is raised, the angle formed by the direction of air current from the carrying route to the lower end of the first control board 11 and the direction of air current from thence to the suction air route is approximately 90, for example. The air current is greatly changed in direction (approx. 90), greatly increasing the ease of separation of the carried material from the air current. Therefore, even lightweight materials such as powder, tea leaves, etc. for example are also separated efficiently, making second control board 12, filter F, etc. unnecessary on the suction port 13c side.

If the degree of the change of direction of air current is large as mentioned above, the fluid resistance at that point of diversion increases and the flow velocity of the air current decreases, reducing the volume (capacity) of transportation.

If, on the contrary, the position of the carrying route is lowered, the degree of the change of direction of air current is small, the fluid resistance at that point of diversion decreases and the flow velocity of the air current increases, and this increases transportation capacity. Advantageous from the practical viewpoint is the range in which the angle formed by the air current from the carrying route to the lower end of the first control panel and the air current passing from thence to the suction air rout is max. 120 (change of direction by approximately 60).

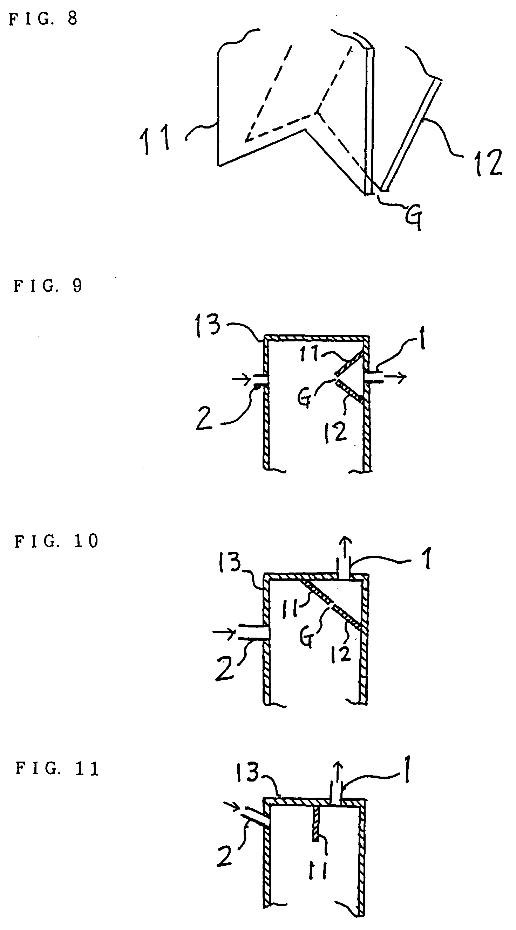

In said example, the lower end of the first control board 11 is straight and the gap G is also straight, and the air current film presents a shape of plane on both the carrying route side and the suction air route side. However, it is not always necessary to have such shape and it is also all right to have a shape of arch at the border between the first and second control boards 11, 12 as shown in Fig. 7 for example, and a film with curved face is formed according to that shape. Moreover, in the case where the gap is in the shape of triangle cone as in Fig. 8, a film of triangle cone shape is formed accordingly. As a result, the width of expansion (length in the direction orthogonal to the direction of center flow of the air current) of the film increases, and the degree of generation of spiral air current in the carrying route gets higher. In this way, gap G of forms other than above is also applicable.

Regarding said formation of air current film, two control boards 11, 12 are provided, facing in horizontal direction the carrying route on the side wall of the equipment body 13a, on the other side wall by forming an angle against each other and leaving a gap G. In that case, the air current film does not change the direction of flow. Also in this case is produced a spiral air current in the carrying route.

Fig. 10 shows a case where two control boards 11, 12 are placed close to each other on one same plane by leaving a gap G. Or it may also be all right to provide a slit corresponding to the gap G in one of the boards.

Fig. 11 shows an example in which, with one board as border, the carrying route and the suction air route are connected to the equipment body by being placed at a certain angle against each other or on about a straight line face to face with each other. Air current film is produced also in this case.

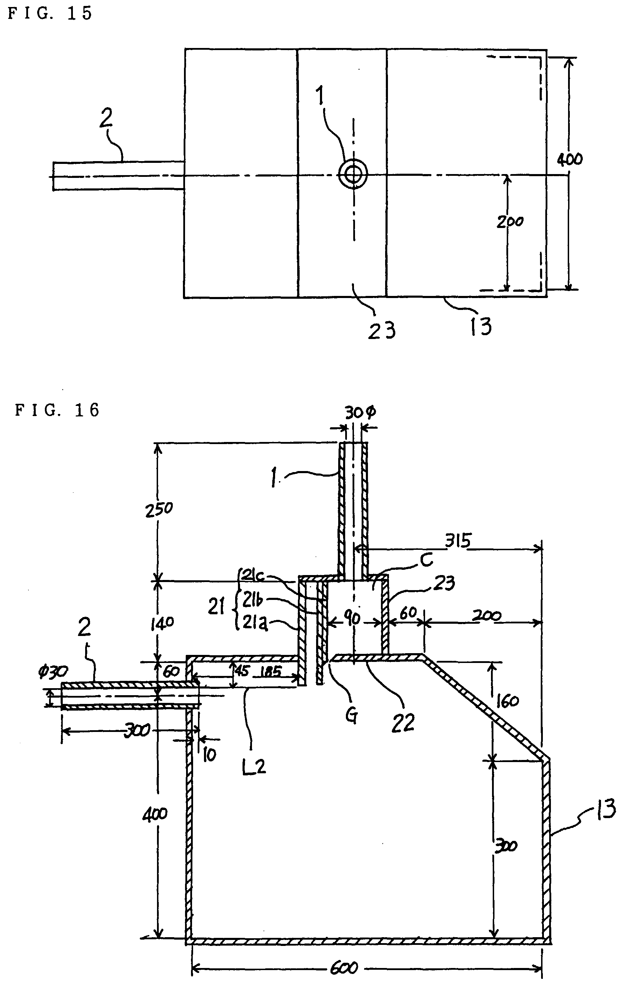

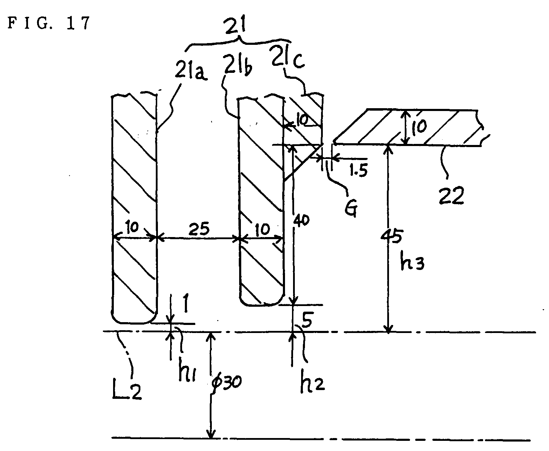

Fig. 15, 16, 17 indicate an example particularly suitable for the transportation of powder. The equipment body has about the shape of a rectangular parallelepiped with the top wall horizontal, and the upper part of the side wall on the side opposite to the side connecting the carrying route 2 is connected to the top wall inclining to the carrying route side. The first control board 21 is composed of 3 sheets, having the lower end of the left board 21a at a position raised by h1, the middle board 21b by h2 and the right board 21c by h3 against the extension line L2 at the top wall position on the inner face of the inflow tube of the carrying route 2. Second control board 22 comes close to the first control board 21 at right angle against the latter leaving a gap (slit) G, and the slit G is positioned higher by h3 than the extension line L2. The lower end of the right board (adjustable board) 21c inclines by 45 against the vertical face, and the tip of the second control board 22 coming close to it inclines by 45 upward against the horizontal face. Moreover, the second control board 22 also serves as the top wall of the equipment body, and on the top side of the top wall of the equipment body is formed intermediate section C just above the gap G with the first control board 21, the second control board 22 and the auxiliary board 23, and the suction air route 1 is connected perpendicularly to the center of this top face.

If powder is transported with this example, the spiral air current in the carrying route 1 takes the shape of a film in the space formed with the first control board 21 and is changed in direction while it passes from the left board 21a to the intermediate board 21b, and part of the powder is separated. Next, during the period when the air passes over the distance h3 from the intermediate board 21b to the gap (slit) G formed with the second control board 22, the air is greatly changed in direction and the greater part of the powder is separated in the horizontal direction to hit against the inclined wall of the equipment body and diverted to the downward direction. Therefore, the amount of the powder discharged from the suction air route 1 by passing through the gap G is very small and it becomes unnecessary to provide any filter there.

Next, the results of experiment will be described hereafter. The dimensions (unit: mm) of the model equipment used are indicated in Fig. 15, 16, 17. Table 1 shows the results of experiment on the powder separating performances.

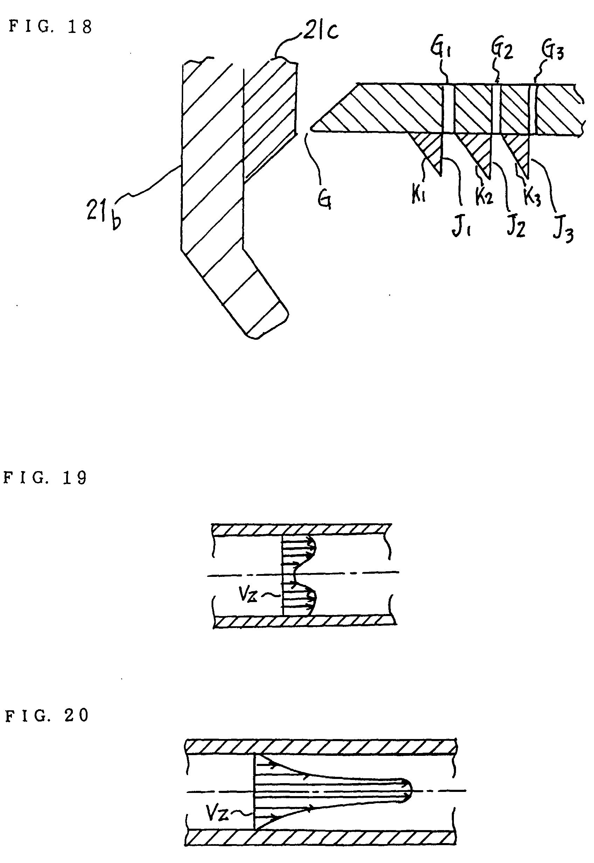

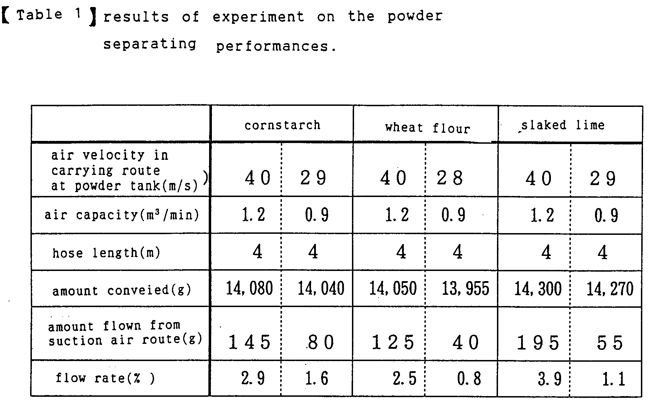

Now, let us consider here characteristics of the air current in the present invention. In general eddy currents, the distribution of velocity is given in a valley type with slower speed at the central part as shown in Fig. 19. On the other hand, in the "spiral flow" of the present invention, as shown in Fig 20, the distribution of velocity is given in a mountain type with a sharp slope in the direction of flow, and the flow velocity Vz in axial direction if extremely rapid at the center of the pipe but slower in the neighborhood of the pipe wall.

Therefore, an air flow conveying system using such "spiral flow" has the following characteristics:
① Because of the distribution of speed, the pressure is lower at the central part of the tube compared with the pipe wall, and the carried material is attracted to the center of the pipe. For that reason, the carried material is hardly worn with little collision with the inside wall of the pipe.
② Because of the distribution of speed, there is little loss of flow due to friction between the air and the pipe wall and the eddy current does not disappear easily. This enables long-distance transportation.
③ Unlike force feed system, this suction type system is hardly clogged with the carried material and, should the carried material (powder, etc.) be blocked in the pipe, it can be removed quite easily.
④ Even fine power (or fine particles of liquid) can be separated from air without any help of a filter (without clogging).

Fig. 18 shows still another example of the present invention. In the case where the lower end of the first control board 21 is inclined on the side of the slit G, the angle at which the air current passing by the lower end is diverted in direction along the sloped face at the lower end becomes larger and the separating performances improve. Moreover, facing the auxiliary slits G1, G2, ... rectifying member 24 is provided extending from the upstream side end of the slits to form down slopes J1, J2, ... and, pass through upward slopes K1, K2, ... to the downstream end of the slits. This makes it possible to maintain a distance between the point of change of direction in the flow channel and the slits G1, G2, ... , reduce the volume of powder reaching the slits and thus improve the separating performances.

Here, by putting the sectional area of flow channel of the suction air route 1 as S1, the sectional area of flow channel of the slit G (G0, G1, G2, ...) as Sg, and the sectional area of flow channel of the carrying route 2 as S2, it is desirable that a relation of about S1 ≧ Sg ≧ S2 be established.

The present invention includes a variety of variations without deviating from the spirit and the scope of the claims, and is not limit to such examples and embodiments as described above.

### Possibility of industrial utilization:

The present invention can be utilized for air flow transportation of commodities such as resin molded parts, metallic parts, cereals, granular materials, powder, etc.

## Claims

1. An air flow conveying method which comprises :
making a sheetlike member to protrude from wall face in a section,
connecting a carrying route and a suction air route to the wall of said section with the sheetlike member as border, either at a certain angle with each other or on about a straight line, and
making an air to circulate beyond the tip of said sheetlike member, to form air film.

2. An air flow conveying method which comprises :
providing a sheetlike member having a slit on the wall face in a section,
connecting a carrying route and a suction air route to the wall of said section with the sheetlike member as border, either at a certain angle with each other or on about a straight line, and
making an air to circulate through the slit in said sheetlike member, to form air film.

3. An air flow conveying method which comprises : connecting a carrying route to the wall on one side of a section,
connecting a suction air route to the wall on the other side of the section on a line intersecting the extension line of the carrying rout,
disposing a control board having slit in the neighborhood of the position where the extension lines of said two routes intersect each other,
making an air to circulate through through said slit to form air film, and to divert the direction of the air current in the air film at the portion of said slit.

4. An air flow conveying system which comprises :
an equipment body of boxlike shape,
a suction air route one end of which being open on the top face of the equipment body and the other end being connected to a suction blower unit,
a carrying route for conveying commodities connected through the side wall of said equipment body in the direction intersecting the suction air route,
a first air current control board provided in projection between said suction air route and said carrying route at right angle with the carrying route, in such a way that its tip substantially corresponds to the central position of the carrying route, and
a second air current control board provided in projection at prescribed angle against said first air current control board, in a way to pinch said suction air route with the first air current control board and to separate its tip from said first air current control board at prescribed distance to form a slit.

5. An air flow conveying system according to Claim 4 which comprises: means for changing distance between said first air current control board and said second air current control board.

6. An air flow conveying system according to Claim 4 or Claim 5 : wherein an intermediate section being formed in the upper inner side of the equipment body between said first and second air current control boards and the both side walls and top wall of the equipment body.

7. An air flow conveying system according to Claim 4 or Claim 5: wherein an intermediate section being formed in the upper outer side of the equipment body by said first and second air current control boards.

8. An air flow conveying system according to Claim 4, Claim 5, Claim 6 or Claim 7: wherein no less than one auxiliary slit corresponding to the flow rate of the suction air route being provided in said second air current control board.

9. An air flow conveying system according to Claim 4, Claim 5, Claim 6, Claim 7 or Claim 8: wherein the slit by said first and second air current control boards being positioned higher than the lower end of said first air current control board.

10. An air flow conveying system according to Claim 4, Claim 5, Claim 6, Claim 7, Claim 8 or Claim 9: wherein the equipment body being of about rectangular parallelepiped form and the top part of the side wall on the side opposite to said carrying route side inclining on said carrying route side to continue to the top wall.
